Europäisches Patentamt

European Patent Office

Office européen des brevets

(19)

(11) Veröffentlichungsnummer : **0 077 756**
**B1**

(12) **EUROPÄISCHE PATENTSCHRIFT**

(45) Veröffentlichungstag der Patentschrift :
25.03.87

(21) Anmeldenummer : 82810422.4

(22) Anmeldetag : 11.10.82

(51) Int. Cl.⁴ : **B 29 C 65/18, B 65 B 7/16**

(54) Vorrichtung zum Verschliessen von gefüllten Behältnissen.

(30) Priorität : 19.10.81 CH 6662/81

(43) Veröffentlichungstag der Anmeldung :
27.04.83 Patentblatt 83/17

(45) Bekanntmachung des Hinweises auf die Patenterteilung : 25.03.87 Patentblatt 87/13

(84) Benannte Vertragsstaaten :
AT BE CH DE FR GB IT LI LU NL SE

(56) Entgegenhaltungen :
DE-A- 2 806 770
DE-B- 1 253 904
US-A- 3 673 041

(73) Patentinhaber : SCHWEIZERISCHE ALUMINIUM AG

CH-3965 Chippis (CH)

(72) Erfinder : Festag, Werner
Klausweg 31
CH-8200 Schaffhausen (CH)
Erfinder : Müller, Hans-Ueli
Stalden 8
CH-8224 Löhningen (CH)

## Beschreibung

Die Erfindung betrifft eine Vorrichtung zum Aufsiegeln eines Deckels auf gefüllte Behältnisse, beide aus Kunststoff- oder Al-Kunststoff-Verbundfolie, mit einem beheizbaren Siegelwerkzeug aus einem verformbaren und einem formfesten Druckelement, von denen eines von konvexem Querschnitt ist, wobei die Druckelemente zum Ausbilden einer Siegelnaht in Deckel und Flansch des Behältnisses aufeinander zu bewegbar sind.

Eine Vorrichtung dieser Art ist der US-PS 3 673 041 zu entnehmen, bei der das verformbare Druckelement dem konvexen Druckelement gegenüberliegt. Diese Ausgestaltung hat eine unerwünschte Verformung des Siegelgutes zur Folge.

Angesichts dieser Gegebenheiten hat sich der Erfinder die Aufgabe gestellt, eine Vorrichtung der eingangs genannten Art so weiter zu bilden, dass eine Versiegelungsnaht ohne Einschlüsse und ohne Verformung des Behälterflansches erzeugt wird.

Zur Lösung dieser Aufgabe führt, dass das verformbare Druckelement mindestens in einem Bereich einen konvexen Querschnitt aufweist und ein Auflager für den Rand des Behältnisses bildet. Dank dieser Ausgestaltung ist sowohl eine Säuberung der Naht als auch eine Formstabilität des Siegelgutes während des Siegelvorganges zu erzielen.

Eine bevorzugte Ausgestaltung ist durch die Merkmale des Anspruchs 2 gekennzeichnet.

Schon in der Anfangsphase des Siegelvorgangs wird der Druck, von einer sehr schmalen Kontaktzone ausgehend, so aufgebaut, dass die Oberflächen der Versiegelungsränder in einem Winkel zueinander stehen und sich erst am Endpunkt des Siegelvorgangs bzw. des Druckaufbaus parallel zueinander anordnen mit der Folge, dass insbesondere in der Anfangsphase des Siegelvorgangs — also, wenn die Siegelschichten noch plastisch verformbar sind, bzw. noch nicht klebefähige (hot-tack) Eigenschaften zeigen — die zu siegelnden Flächen in einem ausreichend grossen Winkel zueinander stehen, der das Entweichen von Füllgutbestandteilen aus der Siegelzone ungehindert ermöglicht.

Der Einsatz der erfindungsgemäßen Vorrichtung empfiehlt sich insbesondere bei Form- Füll-Siegel-Anlagen, wo in einer Packstoffbahn aus Thermoplast bzw. aus einem Al-Kunststoffverbund durch Thermoformen bzw. Tiefen (Streckziehen) Behältnisse zur Aufnahme des Füllgutes ausgebildet werden und der so ausgeformte und befüllte Packstoff mit einer Deckelfolie durch Heißsiegeln so abgedeckt und verschlossen wird, daß die Bahn anschließend in einzelne, durch eine Deckelfolie verschlossene Behältnisse unterteilt werden kann.

Die Erfindung wird nachfolgend anhand in der Zeichnung in vereinfachter Darstellungsweise wiedergegebener bevorzugter Ausführungsbeispiele näher erläutert ; dabei zeigt

Figur 1 einen Querschnitt durch einen Teil eines Siegelwerkzeuges aus einem verformbaren sowie einem formstabilen Druckelement in Ausgangslage ;

Figur 2 eine der Fig. 1 entsprechende Wiedergabe der beiden Druckelemente, die sich bei drucklosem Kontakt gegenüberstehen ;

Figur 3 die beiden Druckelemente nach Fig. 1, 2 in Siegelstellung mit einer Siegelnaht zwischen einem Behälterflansch und einem Deckel ;

Figuren 4 bis 6 jeweils einen Querschnitt durch einen Teil des verformbaren Druckelements in unterschiedlichen Querschnittsformen ;

Figur 7 einen Querschnitt durch einen Teil eines Siegelwerkzeugs zum Verschließen von mehreren zusammenhängenden Behältnissen ;

Figur 8 eine der Fig. 7 entsprechende Wiedergabe einer weiteren Ausführungsform.

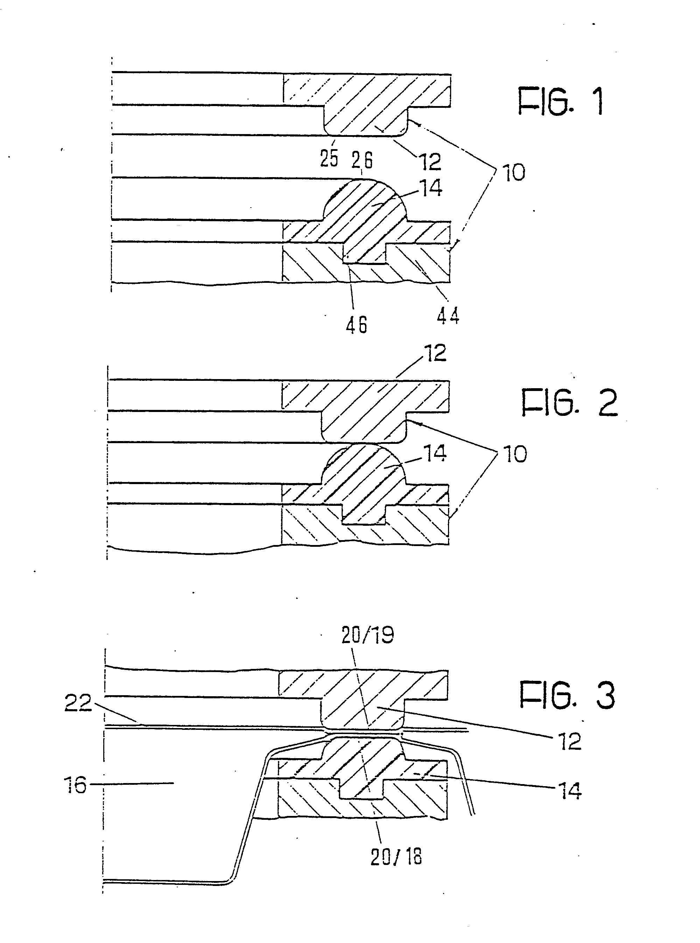

Ein Siegelwerkzeug 10 weist gemäß fig. 1 bis 3 zum Versiegeln oder Heißversiegeln von aus einer Kunststoffolie oder einem Al-Kunststoffverbund hergestellten Behältnissen 16 zusammenfahrbare Druckelemente 12 und 14 auf. Mindestens eines der Druckelemente 12, 14 kann mit einer Heizeinrichtung 42 ausgestattet sein.

Das in der Zeichnung oben angeordnete Druckelement 12 des Siegelwerkzeuges 10 mit einer zur Siegelfläche 18 des Behältnisses 16 planparallelen Oberfläche ist aus einem nicht verformbaren Werkstoff hergestellt. Das untere Druckelement 14 des Siegelwerkzeuges 10 besteht aus einem elastisch verformbaren Werkstoff und weist einen i. w. konvexen bzw. halbkreisförmig gewölbten Querschnitt auf, dessen Oberfläche 26 zur planparallelen Oberfläche 25 des anderen Druckelementes 12 hin gerichtet ist.

Beim Zusammenfahren des Siegelwerkzeuges 10 bzw. seiner Druckelemente 12, 14 werden die Siegelflächen 18 und 19 des Behältnisses 16 und eines aufzusiegelnden, gegebenenfalls folienartigen Deckels 22 zur weitgehenden Vermeidung von Einschlüssen in der zwischen jener Siegelfläche 18, 19 entstehenden Siegelnaht 20 von unerwünschten Bestandteilen gereinigt.

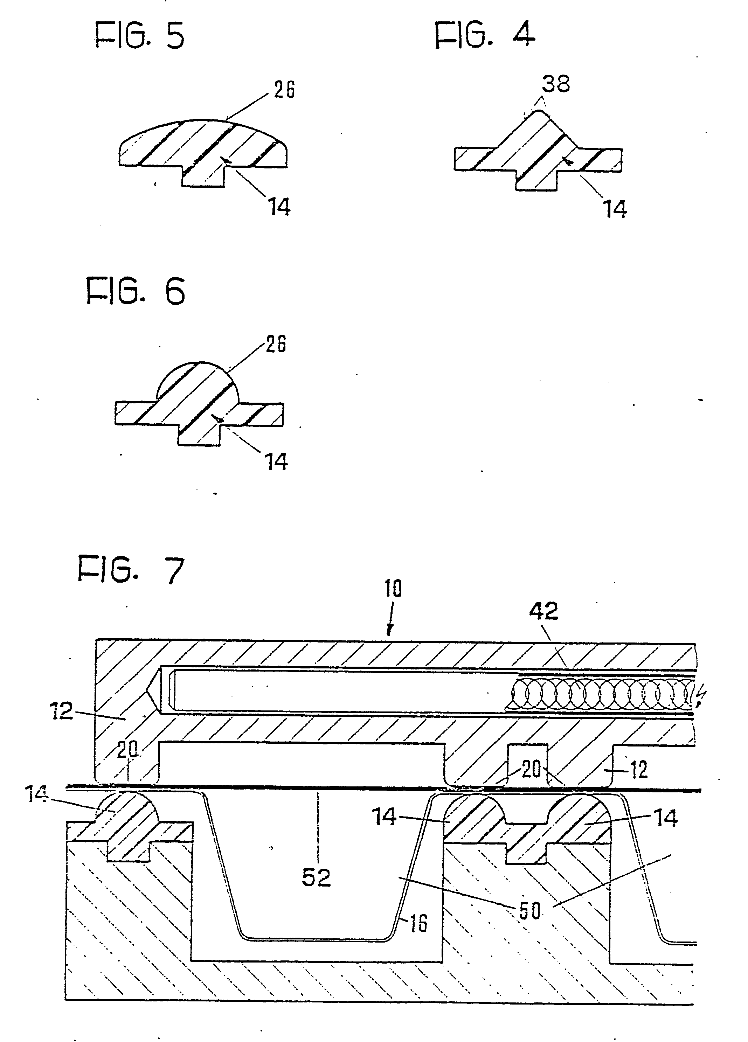

Das aus elastisch verformbarem Werkstoff bestehende Druckelement 14 kann mit unterschiedlich geformter Kontur der Oberfläche 26 versehen sein, nach Fig. 4 beispielsweise mit einer dreiecksförmigen, in eine Spitzenkurve 38 übergehende Kontur sowie nach Fig. 5 mit einer flach teilkreisartigen Kontur, während Fig. 6 einen Halbkreis als Kontur erkennen läßt.

Als elastisch verformbares Material gelangt für das Druckelement 14 vorzugsweise ein Silikonkautschuk oder ein Nitrilkautschuk zur Anwendung.

Damit das elastisch verformbare Material unter hohem Druck nicht auszuweichen vermag, kann für die Fixierung desselben eine Metalleinfassung 44 vorgesehen werden (Fig. 1). Diese ist beispielsweise mit einer nicht gezeigten hinterschnittenen Nut ausgestattet, in welcher ein Steg 46 des Druckelements 14 unter einer Vorspannung gehalten ist. Weitere Möglichkeiten zum Halten des elastischen Druckelementes 14 sind die Anordnung von Schraubenverbindungen sowie das Ansaugen an eine Unterlage.

Bei einigen Heißsiegelbedingungen, insbesondere wenn hohe Taktzahlen oder sehr dicke bzw. wärmisolierende Materialien zum Heißsiegeln gelangen, ist es zweckmäßig, beide Druckelemente 12 und 14 des Siegelwerkzeuges 10 mit Heizeinrichtungen 42 zu versehen. Um über das elastische Druckelement 14 eine ausreichende Wärmemenge in die Siegelnaht einleiten zu können, kann zu dessen Herstellung beispielsweise eine wärmeleitfähige Kautschukmischung mit Graphit-Bestandteilen verwendet werden. Außerdem kann das Druckelement 14 möglichst tief in die wärmeleitfähige Metalleinfassung 44 eingelassen werden.

Aus Fig. 7 ist ein Siegelwerkzeug 10 zum Versiegeln zusammenhängender Behältnisse 16 von Mehrfachpackungen 50 zu ersehen. Es wird gleichzeitig eine Mehrzahl zusammenhängender Behältnisse 16 mit einer diese abdeckenden Folie 52 versiegelt. Nach dem Versiegeln werden die Behältnisse 16 mittels nicht dargestellter Trennwerkzeuge getrennt.

Zwischen jeweils zwei der Behältnisse 16 bzw. zwischen zwei Reihen derselben werden gleichzeitig zwei Siegelnähte 20 mit Hilfe der Druckelemente 12 und 14 des Siegelwerkzeuges 10 gebildet, an der Außenseite der Behältnisse ist nur eine Siegelnaht 20 vorgesehen. Die Trennung der Behältnisse erfolgt hierbei zwischen den beiden benachbarten Siegelnähten 20, die durch zwei halbkreisförmige Querschnitte des elastischen Druckelementes 14 gebildet werden.

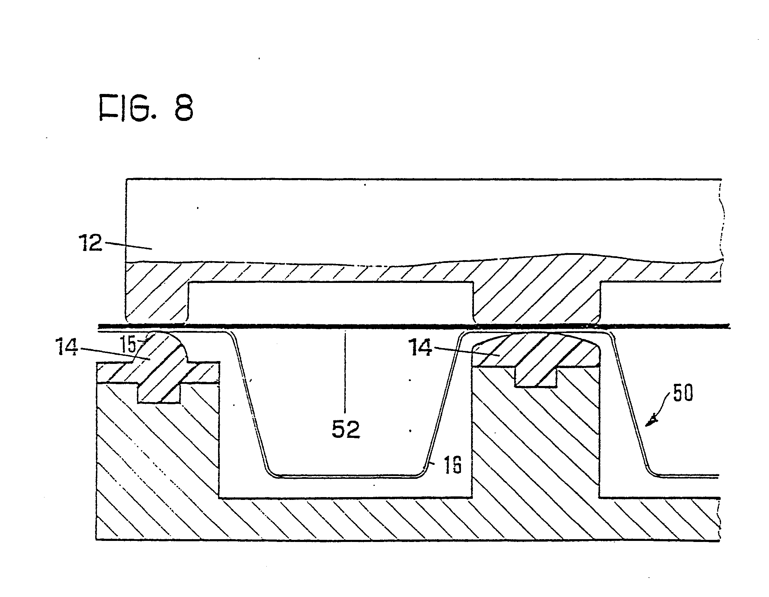

Bei dem in Fig. 8 gezeigten Siegelwerkzeug 10 zum Versiegeln zusammenhängender Behältnisse 16 bzw. Mehrfachpackungen 50 ist das in der Zeichnung links außen liegende elastische Druckelement 14 an der Außenseite der Mehrfachverpackung 50 mit einer geneigten Pultfläche 15 versehen, welche den konvexen Querschnitt seitlich so verändert, daß die für das Versiegeln unerwünschten Bestandteile stets in Richtung zur Innenseite des anschließenden Behältnisses 16 gefördert werden ; nach erfolgter Trennung der Behältnisse 16 entfällt so ein Entfernen von gegebenenfalls an der Außenseite eines Behältnisses anhaftenden Füllresten.

Bei Anwendung des Siegelwerkzeuges 10 werden ein oder mehrere Behältnisse 16 samt Deckel 22 oder Deckfolie 52 zwischen die Druckelemente 12, 14 verbracht, die dann zusammengefahren werden. Es bildet sich unter Entfernen von Verunreinigungen im Bereich der herzustellenden Siegelnaht 20 eine schmalflächige Siegellinie, welche sich unter zunehmendem Druck an den Druckelementen 12, 14 über die gesamte Fläche der Siegelnaht 20 allmählich verbreitert. Die Reinigung der Siegelflächen bzw. das Entfernen von für die Versiegelung unerwünschten Bestandteilen aus dem Siegelbereich erfolgt durch Zusammenwirken der beiden Druckelemente 12 und 14 des Siegelwerkzeuges 10, beim Druckaufbau zwischen diesen und der zunehmenden Verbreitung der Siegellinie werden unerwünschte Bestandteile der Behälterfüllung oder auch Wasser- und Lufteinschlüsse von den zu versiegelnden Siegelflächen 18, 19 entfernt bevor der eigentliche Versiegelungsvorgang beginnt, in dessen Verlauf keine Durchbiegung an jenen Siegelflächen 18, 19 entsteht. Letztere gelangen beim Schließen des Siegelwerkzeuges 10 zunächst nur entlang einer zur späteren Siegelnaht parallel laufenden Linie in Kontakt. Beim weiteren Schließvorgang paßt sich das elastische Druckelement 14 unter dem Druck des nicht verformbaren Druckelementes 12 an dessen Oberfläche 25 an, wobei die zu siegelnden Behältnis- bzw. Deckelflächen 18, 19 tangential an die Oberfläche 26 des elastischen Druckelementes 12 zur Anlage gelangen.

## Patentansprüche

1. Vorrichtung zum Aufsiegeln eines Deckels auf gefüllte Behältnisse, beide aus Kunststoff- oder Al-Kunststoff-Verbundfolie, mit einem beheizbaren Siegelwerkzeug aus einem verformbaren und einem formfesten Druckelement, von denen eines von konvexem Querschnitt ist, wobei die Druckelemente zum Ausbilden einer Siegelnaht in Deckel und Flansch des Behältnisses aufeinander zu bewegbar sind, dadurch gekennzeichnet, dass das verformbare Druckelement (14) mindestens in einem Bereich einen konvexen Querschnitt aufweist und ein Auflager für den Rand des Behältnisses (16) bildet.

2. Vorrichtung nach Anspruch 1, dadurch gekennzeichnet, dass das Druckelement (14) an der dem Behältnis zugewandten Seite den konvexen Querschnitt aufweist und an der dem Behältnis (16) abgewandten Seite zu einer pultartigen Fläche (15) abgeschrägt ist.

## Claims

1. Device for sealing a lid upon filled vessels, both being of synthetic plastics or Al-synthetic plastics composite foil, having a heatable sealing tool of a deformable pressure element and a pressure element of fixed form, one of which is of convex cross-section, the pressure elements being movable towards one another for the formation of a sealing seam in the lid and flange of the vessel, characterised in that the deformable pressure element (14) possesses a convex cross-section at least in one region and forms an abutment for the edge of the vessel (16).

2. Device according to Claim 1, characterised in that the pressure element (14) possesses the convex cross-section on the side facing the vessel and is bevelled off to form a lectern-type surface (15) on the side remote from the vessel (16).

## Revendications

1. Dispositif pour sceller un couvercle sur des récipients remplis, constitués l'un et l'autre d'une feuille de plastique ou d'une feuille complexe aluminium-plastique, comportant un outil de scellement chauffant composé d'un élément de pression déformable et d'un élément de pression non déformable, dont l'un est de section convexe, étant précisé que les éléments de pression peuvent se déplacer pour venir l'un sur l'autre pour donner un joint scellé dans le couvercle et dans le bord tombé du récipient, caractérisé en ce que l'élément de pression déformable (14) présente au moins dans une zone une section convexe et forme un appui pour le bord du récipient (16).

2. Dispositif selon la revendication 1, caractérisé en ce que l'élément de pression (14) présente la section convexe du côté tourné vers le récipient et, du côté opposé au récipient (16), présente un chanfrein donnant une surface en forme de pupitre (15).

FIG. 1

25  26      12      10

14

46      44

FIG. 2

12

14      10

20/19

FIG. 3

22

12

16

14

20/18

1

FIG. 5

FIG. 4

FIG. 6

FIG. 7

FIG. 8